# EUROPEAN PATENT APPLICATION

(11) **EP 2 196 490 A1**
(43) Date of publication of application: **16.06.2010**
(21) Application number: 07806972.1
(22) Date of filing: 08.09.2007
(51) Int. Cl.: C08J 5/24, C08L 79/08

(54) **FIBER-REINFORCED PREPREG AND COMPOSITE MATERIAL OBTAINED THEREFROM**

(71) Applicant: Toho Tenax CO., LTD., 2-38-16 Hongo Bunkyo-ku Tokyo 113-8404 (JP)
(72) Inventor: KANEKO, Toru, Sunto-gun Shizuoka 411-8720 (JP); NAITO, Takeshi, Sunto-gun Shizuoka 411-8720 (JP); SANAI, Shusuke, Sunto-gun Shizuoka 411-8720 (JP)
(74) Representative: Hallybone, Huw George
(86) International application number: PCT/JP2007/067540
(87) International publication number: WO 2009/031243

(57) **Abstract**

There are provided a prepreg obtained by impregnating into a fiber reinforcement a resin composition including 40 to 70 parts by weight of an aromatic bismaleimide (A) expressed by a specific general formula, 60 to 30 parts by weight of an alkenylphenol (B) expressed by a specific general formula, 1 to 10% by weight of a polyetherimide (C) of a thermoplastic resin base on the total amount of components (A) and (B), and 15 to 50% by weight of an amorphous polyimide (D) having a glass transition temperature of 200°C or higher, and a composite material obtained by heating and curing the prepreg. Also provided are the fiber-reinforced prepreg and the composite material without spoiling thermal resistance characteristic of the aromatic bismaleimide resin used as a main component of a resin and having excellent toughness imparted thereto.

## Description

### Technical Field

The present invention relates to a fiber-reinforced prepreg (or may simply be called a prepreg) and a composite material obtained therefrom, and more particularly, to a fiber-reinforced prepreg to which excellent toughness is imparted without spoiling the thermal resistance of an aromatic bismaleimide resin used as a main component of a matrix resin, or a composite material using the same.

### Background Art

Fiber-reinforced composite materials make the best use of the features of their excellent specific strength and specific elasticity and are widely applied to applications such as aviation/space articles. Conventionally, epoxy resins are primarily used as a matrix resin; however, the epoxy resins also suffer from the problem of not being able to sufficiently satisfy the requirement of thermal resistance against 200°C or higher. On the other hand, although polyimides known as a high-temperature resin are excellent in thermal resistance, they cause a problem in formability and thus their practical use to a matrix resin are behind.

In these situations, bismaleimide resins such as aromatic bismaleimide-based resins excellent in balance between thermal resistance and moldability are paid to attention as a matrix resin for fiber-reinforced composite materials such as carbon fibers. However, bismaleimide resins have the defect of low toughness, and therefore their applications are considerably limited. Although a method of blending a rubber component or a thermoplastic resin and a method of copolymerizing other monomers are proposed as a method of improving this defect of bismaleimide resins, the resin has created problems such as the improvement of toughness being insufficient as compared to a decrease in physical properties such as thermal resistance being large. In addition, while a method of inserting a kind of adhesion layer or a shock absorbing layer, called an inter leaf into an interlayer is proposed, it has disadvantages that the fiber content is not increased and handleability is poor, so that the method has not generally been used.

Japanese Patent No. 3312441 (Patent Document 1) discloses a prepreg excellent in impact resistance properties in which thermoplastic resin particulates are localized in a thermosetting resin composition. However, its Examples show the use of an epoxy resin as a matrix resin and do not disclose the advantage of aromatic bismaleimide resins.

Japanese Patent Application Laid-Open Publication No. 06-41332 (Patent Document 2) discloses a prepreg in impact resistance properties that is produced by using thermoplastic resin particulates having an imide linkage or thermoplastic resin particulates having a silicone linkage for an aromatic bismaleimide resin composition. However, the prepreg does not have sufficient improved impact resistance properties and also the glass transition temperature and solvent-resistant properties (MEK) of the fiber-reinforced composite material are not necessarily sufficient.
Patent Document 1: Japanese Patent No. 3312441
Patent Document 2: Japanese Patent Application Laid-Open Publication No. 06-41332

Additionally, even in other documents (Nonpatent Document 1), it is conceptually and generally known that a thermosetting resin is reinforced by addition of thermoplastic resin particulates thereto. For example, it is reported that the addition of a polyetherimide of a thermoplastic resin to a bismaleimide resin improves the toughness of the cured resin.
However, since solvent resistance of polyetherimides (particularly, solvent resistance to methyl ethyl ketone) is poor, the solvent-resistant properties of the bismaleimide resin are remarkably and disadvantageously decreased when the amount of addition of a polyetherimide is increased. Moreover, when the amount of addition of a polyetherimide is small, the solvent-resistant properties of the bismaleimide resin are good, but there is also the problem that the cured resin shows merely little toughness improvement.
Nonpatent Document 1: 33rd International SAMPE Symposium, 1988

### Disclosure of the Invention

### Problems to be Solved by the Invention

The study of the inventors has shown that addition of several thermoplastic resins to a bismaleimide resin lowers the toughness of the cured resin as compared with that of an unmodified resin in some cases. As such, it seemed to be almost impossible to predict the toughness improvement of a resin by the addition of wide kinds of thermoplastic resins in the bismaleimide resin system. However, the inventors have diligently studied and found that the use of a certain kind of thermoplastic resin makes it possible to effectively improve the toughness of a bismaleimide resin without spoiling thermal resistance and solvent resistance. In addition, this bismaleimide resin-based resin composition improved in toughness has been found to be very excellent for a fiber-reinforced prepreg and a composite material.

An object of the present invention is to provide a fiber-reinforced prepreg and a composite material which are used as main components of a matrix resin and to which excellent toughness is imparted without spoiling thermal resistance that is a characteristic of an aromatic bismaleimide resin.

### Means for Solving the Problems

The present invention is a prepreg that is produced by impregnating a resin composition including components (A) to (D) below as essential components into a fiber reinforcement (invention of claim 1). In addition, another aspect of the invention is a composite material produced by heat-curing such prepreg, wherein component (D) is localized between laminated layers and forms a phase separated structure (invention of claim 8).
(A) 40 to 70 parts by weight of an aromatic bismaleimide expressed by formula [1] below,
(B) 60 to 30 parts by weight of an alkenylphenol expressed by formula [2] below,
(C) 1 to 10% by weight of a polyetherimide of a thermoplastic resin based on the total amount of components (A) and (B) above, and,
(D) 15 to 50% by weight of an amorphous polyimide the glass transition temperature of which is 200°C or higher based on the total amount of components (A) and (B) above.

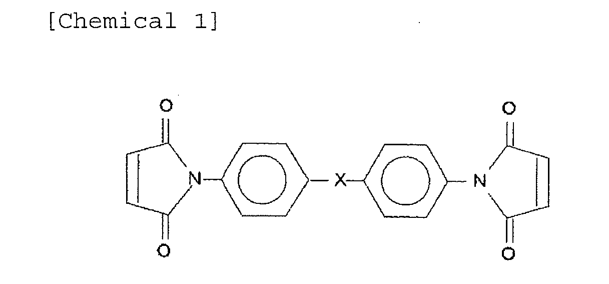

### Formula [1]

wherein, X is -CH₂-, -C(CH₃)₂-, -SO₂-, -SO-, -CO-, -S- and -O-.

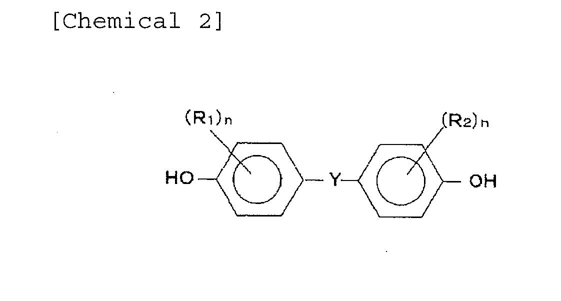

### Formula [2]

wherein, R₁ or R₂ is each independently an allyl group, n is an integer of 1 to 4, and Y is -CH₂-, or -C(CH₃)₂-

### Advantages of the Invention

A prepreg and a composite material having as a matrix resin a resin composition including an aromatic bismaleimide resin of the present invention have excellent toughness without spoiling the excellent thermal and mechanical characteristics of the matrix resin. Hence, a prepreg and a composite material of the present invention can be suitably used for structural materials for aircrafts and the like.

### Description of the Preferred Embodiments

The ratio of component (A) to (B) of the resin composition of the invention is 40 to 70 parts by weight: 60 to 30 parts by weight, preferably 50 to 60 parts by weight: 50 to 40 parts by weight. In addition, component (C) is 1 to 10% by weight, preferably 2 to 5% by weight, based on the total amount of components (A) and (B), and component (D) is 15 to 50% by weight, preferably 20 to 30% by weight, based on the total amount of components (A) and (B). Other well-known, various resins and additives can optionally be added to the resin composition of the invention within the scope of not losing the object and advantages of the invention.

Component (D) of the invention is an amorphous polyimide having a glass transition temperature of 200°C or higher and, of these, preferably an amorphous polyimide having 40% by mole or more of a repeated structural unit expressed by formula [3] below and 5 to 60% by mole of a repeated structural unit expressed by formula [4] below (invention of claim 2).

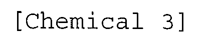

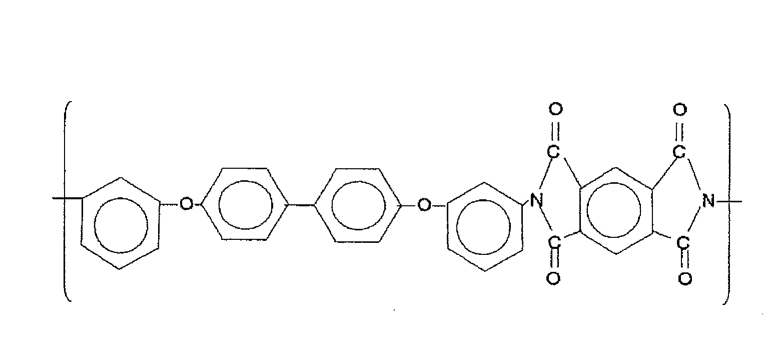

### Formula [3]

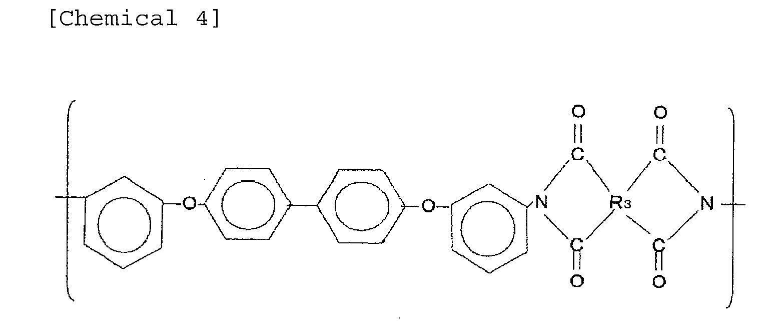

### Formula [4]

wherein, R₃ is a quadrivalent group selected from the group consisting of a monocyclic aromatic group, a condensed polycyclic aromatic group and non-condensed polycyclic aromatic groups produced by linking directly or via a cross-linked member an aromatic group to each other.

An aromatic bismaleimide of component (A) expressed by formula [1] above of the present invention can be obtained by a well-known method in which a corresponding aromatic diamine reacts with maleic anhydride. The aromatic bismaleimide is preferably dissolved in an alkenylphenol component.

The aromatic bismaleimides can include N,N'-m-phenylene bismaleimide, N,N'-p-phenylene bismaleimide, N,N'-m-toluylene bismaleimide,
N,N'-4,4'-biphenylene bismaleimide,
N,N'-4,4'-(3,3'-dimethylbiphenylene)bismaleimide,
2,2-bis[4-(4-maleimidephenoxy)phenyl]propane, and the like.

Among the aromatic bismaleimides expressed by formula [1] above, N,N'-4,4'-diphenylmethane bismaleimide
(bismaleimidediphenylmethane),
N,N'-4,4'-diphenyl ether bismaleimide,
N,N'-m-toluylene bismaleimide,
2,2-bis[4-(4-maleimidephenoxy)phenyl]propane,
N,N'-4,4'-diphenylsulfonebismaleimide,
N,N'-4,4'-benzophenone bismaleimide, and the like are preferred from the viewpoint of resin thermal resistance after curing. In particular, N,N'-4,4'-diphenylmethane bismaleimide, N,N'-4,4'-diphenyl ether bismaleimide,
N,N'-m-toluylene bismaleimide and
2,2-bis[4-(4-maleimidephenoxy)phenyl]propane are preferred.
The aromatic bismaleimides above may be used alone or in combination of two or more kinds.

The alkenylphenols of component (B) expressed by formula [2] of the invention include O,O'-diallylbisphenol A, 4,4'-dihydroxy-3,3'-diallyldiphenyl, bis(4-hyroxy-3-allylphenyl)methane, 2,2'-bis(4-hydroxy-3,5-diallylphenyl)propane, 2,2'-diallylbisphenol F, 4,4'-dihydroxy-3,3'-diallyldiphenyl ether, and the like.
Among them, O,O'-diallylbisphenol A, 2,2'-bis(4-hydroxy-3,5-diallylphenyl)propane, 2,2'-diallylbisphenol F, and the like are preferred because the resin after curing has a high glass transition temperature, and O,O'-diallylbisphenol A is particularly preferred since it makes the viscosity of the resin prior to curing low.

One example of particularly preferred combinations of aromatic bismaleimides and alkenylphenols, as indicated above, can include the "Matrimid 5292" series (made by Huntsman Corp.) commercially available from Huntsman Corp., namely, 4,4'-bismaleimide diphenylmethane (Matrimid 5292A) and O,O'-diallylbisphenol A (Matrimid 5292B).

The polyetherimide of thermoplastic resin of component (C) above of the invention is used in an amount of 1 to 10 parts by weight based on 100 parts by weight of the sum of components (A) and (B) (1 to 10% by weight based on the total amount of both components), preferably in an amount of 2 to 5 parts by weight. If exceeding 10 parts by weight, the amount is improper since the solvent-resistant properties are worsened. A polyetherimide having a repeated structural unit expressed by formula [5] below and an number average molecular weight of 3,000 to 50,000 is preferred as the polyetherimide of thermoplastic resin of component C.

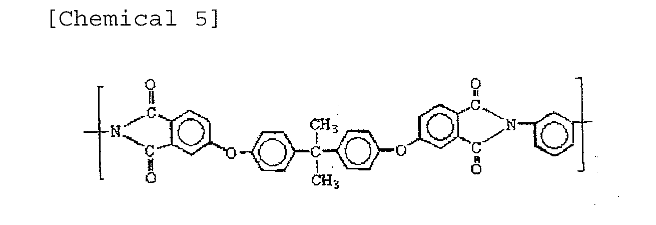

### Formula [5]

In particular, the polyetherimide "Ultem 1000" (made by GE Corp.) commercially available from GE Corp is preferred. It is preferred that this polyetherimide is completely dissolved in a resin component including 40 to 70 parts by weight of an aromatic bismaleimide, i.e., component (A) and 60 to 30 parts by weight of an alkenylphenol, i.e., component (B) and used.

The amorphous polyimide that has a glass transition temperature of 200°C or higher, preferably 220°C or higher, and is component (D) used in the invention, preferably includes a polyimide having 40% by mole of the repeated structural unit expressed by formula [3] above and 5 to 60% by mole of the repeated structural unit expressed by formula [4] above, and particularly "AURUM PD450M" (made by Mitsui Chemicals, Inc.) commercially available from Mitsui Chemicals, Inc.

The particulation of this amorphous polyimide is made by pulverization and classification by means of a pulverizer. Particulation can uniformly disperse polyetherimide (C) of the thermoplastic resin in a mixture of an aromatic bismaleimide (A) and an alkenylphenol (B). In particular, the particulates having a particle diameter of 100 µm or less are preferred. (invention of claim 3) More preferable is a particle diameter of 1 to 20 µm. The case where the particle diameter exceeds 100 µm causes concentration unevenness, etc. during compatibilization at a high temperature, and thus there is the possibility to pose the problem of lowering the strength of cured resin.

The amount of addition of an amorphous polyimide as a resin component of the invention, e.g., AURUM PD450M (made by Mitsui Chemicals, Inc.), is 15 to 50 parts by weight based on 100 parts by weight of a mixture of an aromatic bismaleimide and an alkenylphenol (15 to 50% by weight based on the total amount of the mixture). The amount is more preferably from 20 to 30 parts by weight. The reason why the amount of addition of an amorphous polyimide is set to be in the range is that, when the amount of addition is 50 parts or more, the viscosity of the resin composition is increased, thereby posing the problem of spoiling the tack properties of a prepreg that uses the present resin composition. In addition, when the amount of addition of an amorphous polyimide is 15 parts by weight or less, the improved effect of impact resistance properties is insufficient.

The prepreg of the invention can be produced, for example, by impregnating into a fiber reinforcement a dispersion resin composition obtained by uniformly dispersing amorphous polyimide particulates of component (D) in a uniform resin composition obtained by completely dissolving in components (A) and (B) a polyetherimide of thermoplastic resin of component (C). The means and the method of impregnation are not particularly limited and the methods may include a method of impregnating a fiber reinforcement into a solution or a dispersion liquid of a resin composition, a method of laminating a film of a resin or composition on a fiber reinforcement and pressurizing and heating it by a heated roll and then impregnating the melted resin component into a fiber reinforcement, and the like.

When the particle diameter of amorphous polyimide particulates of component (D) is larger than the diameter of single fibers of the fiber reinforcement, the amorphous polyimide particulates of component (D) is filtered by the fiber reinforcement in a prepreg impregnation step, and a prepreg in which the polyimide particulates are localized and distributed in the vicinity of the surface of the prepreg is obtained (invention of claim 4).

Amorphous polyimide particulates of component (D) may be actively localized in the surface vicinity of one or both sides of a prepreg. A fiber reinforcement is laminated on a film of a resin composition made of components (A), (B) and (C) and the resulting material is heated and pressurized by a heated roll or the like to thereby produce a prepreg. Amorphous polyimide particulates of component (D) are sprinkled on one or both sides of this prepreg and the resulting material is pressurized and heated by a heated roll to thereby obtain a composite material having localized thereon the amorphous polyimide particulates.

Further, the amorphous polyimide of component (D) can be used as a fibrous nonwoven fabric. For example, a fiber reinforcement is laminated on a film of a resin composition made of components (A), (B) and (C), or a fiber reinforcement is sandwiched with the films, and a fibrous nonwoven fabric of an amorphous polyimide is inserted into between the fiber reinforcement and the film, and then the resulting material is heated and pressurized by heated roll or the like to thereby obtain a prepreg in which the fibrous nonwoven fabric is placed in the surface vicinity of one or both sides of a prepreg (invention of claim 5).

Particulates and a fibrous nonwoven fabric may be used together as an amorphous polyimide of component (D). In such case, a prepreg is obtained in which particulates and a fibrous nonwoven fabric are placed in the surface vicinity of one or both sides of a prepreg (invention of claim 6). For example, a film of a dispersion resin composition obtained by uniformly dispersing amorphous polyimide particulates of component (D) and a fiber reinforcement are laminated on resin composition made of components (A), (B) and (C), or a fiber reinforcement is sandwiched with the films, and further a fibrous nonwoven fabric of an amorphous polyimide is inserted into between the fiber reinforcement and the film, and then the resulting material is heated and pressurized by heated roll or the like to thereby obtain a prepreg in which particulates and the fibrous nonwoven fabric are placed in the surface vicinity of one or both sides of the prepreg.

A prepreg used in the present invention may be any prepreg and is not particularly limited. A prepreg refers to a molding intermediate material the handleability of which is made good by impregnating a matrix resin into a fiber reinforcement and removing flowability and adhesiveness. In the present invention, the form of a fiber reinforcement that forms a prepreg is not particularly limited. Usually, in addition to, for example, a material including the warp and the weft such as a plain fabric, twill fabric and satin fabric, a fiber reinforcement is used in forms such as a uniaxial fabric made by arranging a fiber bundle in one direction to form a sheet shape and stitching it with a stitch thread in the perpendicular direction, a multiaxial woven fabric made by laminating a plurality of sheet materials stretched in one direction by changing their angles and stitching them with a stitch thread in the perpendicular direction, and the like. Alternately, a material made by arranging a fiber bundle (strand) in parallel in one direction to form a sheet shape and impregnating a resin thereinto, a tape-like prepreg (bias tape prepreg) made by arranging fiber bundles in ±45° and impregnating a resin into it, or the like may be allowable. The content of a resin in a prepreg is typically in the range of 20 to 80% by weight.

The fiber reinforcement is not particularly limited and specific examples include carbon fibers, glass fibers, aramid fibers, boron fibers, silica fibers, and the like. These fibers may be any of continuous fibers and discontinuous fibers. These fiber reinforcements may be used alone or in combination of two or more kinds, and in particular the invention has a remarkable effect when a carbon fiber is used.

Another aspect of the invention is a composite material produced by heat-curing a prepreg made by impregnating into a fiber reinforcement a resin composition including components (A) to (D) below as essential components, wherein component (D) is localized between laminated layers and forms a phase separated structure (invention of claim 8).
(A) 40 to 70 parts by weight of an aromatic bismaleimide expressed by formula [1] above
(B) 60 to 30 parts by weight of an alkenylphenol expressed by formula [2] above
(C) 1 to 10% by weight of a polyetherimide of a thermoplastic resin based on the total amount of components (A) and (B) above, and,
(D) 15 to 50% by weight of an amorphous polyimide the glass transition temperature of which is 200°C or higher based on the total amount of components (A) and (B) above.

In particular, it is preferred that a prepreg is, for example, heat cured at about 180°C, and further post-cured at 200°C or higher and has a glass transition temperature of a composite material of 200°C or higher (invention of claim 9).

A composite material can be obtained from the prepreg obtained by the invention described in claim 1 by means of usual, various thermal curing means and methods. For example, a composite material is typically obtained by heating and/or pressurization by means of a heating and curing oven by use of a die. The heating and/or pressurizing method by heating or a curing oven is not particularly limited and the examples include methods such as by molding with a usual autoclave, hot press molding, and molding by use of a heat-curing oven. The molding conditions suitably include a pressure of 0.05 to 4 MPa, a temperature of 80 to 200°C and a time of 1 to 3 hours. After the prepreg is heat cured, the die is cooled and then a molded product is demolded and taken out.

In particular, a prepreg is used in which the amorphous polyimide of component (D) obtained in the invention described in claims 4 to 6 is distributed in the surface vicinity of one or both sides of the prepreg to thereby obtain a composite material in which component (D) is localized between laminated layers to form a phase separated structure when a composite material was formed. This composite material is particularly excellent in toughness.

### Example

Hereinafter, the present invention will be described in more detail by way of example. The part means the weight part.

### [Examples 1 to 4]

57 Parts of 4,4' -bismaleimide diphenylmethane (Matrimid 5292A: made by Huntsman Corp.), 43 parts of O,O'-diallyl bisphenol A (Matrimid 5292B: made by the Huntsman Corp.) and 2 to 5 parts of a polyetherimide (Ultem1000: made by GE Corp.) were blended at 130°C for 60 min to dissolve them and prepare resin component (1). This resin component (1) was kneaded with 20 to 30 parts of an amorphous polyimide particulates having an average particle diameter of 10 micrometers (AURUM PD450M: made by Mitsui Chemicals, Inc.) to thereby uniformly disperse polyimide particulates and prepare resin component (2).

This resin component (2) was impregnated into a reinforced fiber in which strands of 410 tex (g/1000 m) of a high-strength and intermediate elastic carbon fiber (made by Toho Tenax Co. , Ltd. : IM-600-12K) are aligned using prepreg-making device to produce a unidirectional prepreg. The mass per unit area of the carbon fiber of the prepreg was 145g/m² and the resin content was 35% by weight. This prepreg was cut out to a given size and were laminated to [+45°/0°/-45°/90°] 4s and the resulting materials were molded by autoclave molding at 180°C for 3 hours at 5 atmospheric pressure. The molded material was demolded and then post-cured for 6 hr in an oven at 200°C to thereby produce test pieces for compression strength after impact measurement. The compression strength after an impact of 1500 in-lb/in was determined in accordance with SRM 2 of SACMA using this test piece. The results were shown in Table 1.

Each of the prepregs obtained in Examples 1 to 4 above was 14-layer laminated in one direction and the resulting material was molded by autoclave molding at 180°C for 3 hours at 5 atmospheric pressure. The molded material was demolded and then post-cured for 6 hr in an oven at 200°C and the interlaminar shear strength was determined in accordance with SRM 8 of SACMA (ILSS). In addition, the interlaminar shear strength after the material had been immersed in a methyl ethyl ketone solution at 23°C for 6 days was measured. The values of ILSS before and after immersion in a methyl ethyl ketone solution were shown in Table 1.

The glass transition temperature of each of the unidirectional molded sheets obtained in Examples 1 to 4 above was determined at a frequency of 1 kHz and a rate of temperature rise of 3°C/min in accordance with the bending mode of JIS K-7244. The peak of loss elastic modulus (E") was taken as the glass transition temperature. The results were shown in Table 1.

**[Table 1]**

| | Example 1 | Example 2 | Example 3 | Example 4 |
|---|---|---|---|---|
| Matrimid 5292 A | 57 | 57 | 57 | 57 |
| Matrimid 5292 B | 43 | 43 | 43 | 43 |
| Polyetherimide | 2 | 2 | 5 | 2 |
| Amorphous polyimide | 25 | 30 | 30 | 20 |
| Compression strength after impact (MPa) | 335 | 303 | 300 | 260 |
| Glass transition temperature (°C) | 235 | 234 | 234 | 235 |
| ILSS (MPa) before immersion | 120 | 121 | 120 | 121 |
| ILSS (MPa) MEK after immersion | 120 | 120 | 119 | 121 |

### [Comparative Example 1]

A test piece was fabricated as in Example 1 except that a resin component was prepared without addition of an amorphous polyimide (AURUM PD450M: made by Mitsui Chemicals, Inc.) and evaluated as in the case of the examples. The results were shown in Table 2.

### [Comparative Example 2]

A test piece was fabricated as in Example 1 except that a crystalline polyimide (AURUM PD250: made by Mitsui Chemicals, Inc.) was used instead of the amorphous polyimide (AURUM PD450M: made by Mitsui Chemicals, Inc.) and evaluated as in the case of the examples. The results were shown in Table 2.

### [Comparative Examples 3 to 4]

A test piece was fabricated as in Example 1 except that resin component (1) was prepared without addition of polyetherimide (Ultem 1000: made by GE Corp.) and evaluated as in the case of the examples. The results were shown in Table 2.

### [Comparative Example 5]

A test piece was fabricated as in Example 1 except that two parts of apolyether sulfone was used instead of polyetherimide (Ultem 1000: made by GE Corp.) and evaluated as in the case of the examples. The results were shown in Table 2.

### [Comparative Example 6]

A test piece was fabricated as in Example 1 except that polyetherimide particulates (Ultem 1000: made by GE Corp.) was used instead of the amorphous polyimide (AURUM PD450M: made by Mitsui Chemicals, Inc.) and evaluated as in the case of the examples. The results were shown in Table 2.

**[Table 2]**

| | Comparative Example 1 | Comparative Example 2 | Comparative Example3 | Comparative Example 4 | Comparative Example 5 | Comparative Example 6 |
|---|---|---|---|---|---|---|
| Matrimid 5292 A | 57 | 57 | 57 | 57 | 57 | 57 |
| Matrimid 5292 B | 43 | 43 | 43 | 43 | 43 | 43 |
| Polyetherimide | 2 | 2 | - | - | - | 30 |
| Polyether sulfone | - | - | - | - | 2 | - |
| Amorphous polyimide | - | - | 25 | 30 | 30 | - |
| crystalline polyimide | - | 30 | - | - | - | - |
| Compression strength after impact (MPa) | 150 | 127 | 200 | 220 | 175 | 290 |
| Glass transition temperature (°C) | 236 | 235 | 234 | 234 | 232 | 233 |
| ILSS (MPa) before immersion | 122 | 121 | 121 | 121 | 120 | 120 |
| ILSS (MPa) MEK after immersion | 122 | 120 | 120 | 121 | 120 | 100 |

As shown in Table 1, the test pieces that used the prepregs in Examples 1 to 4 were high in compression strength after impact and excellent in impact resistance and toughness. However, the test pieces of Comparative Examples 1 to 6 that are outside the scope of the invention posed problems such as low compression strengths after impact. That is, for the resin compositions not containing an amorphous polyimide (Comparative Examples 1 and 2), or the resin compositions not containing a polyetherimide (Comparative Examples 3 to 5), the compression strengths after impact were small and the impact resistance and toughness were inferior. In particular, with the resin composition in which thermoplastic resin particulates other than an amorphous polyimide were dispersed, the compression strength after impact was greatly lowered, which adversely affected the impact resistance (Comparative Example 2). For the glass transition point, a decrease in Tg due to the addition of a thermoplastic resin was not observed. In addition, when a polyetherimide was used in a large amount, the compression strength after impact was high, but the solvent-resistant properties (resistance to methyl ethyl ketone) were poor (Comparative Example 6).

## Claims

1. A prepreg produced by impregnating a resin composition including components (A) to (D) as essential components into a fiber reinforcement.
(A) 40 to 70 parts by weight of an aromatic bismaleimide expressed by formula [1],
(B) 60 to 30 parts by weight of an alkenylphenol expressed by formula [2],
(C) 1 to 10% by weight of a polyetherimide of a thermoplastic resin based on the total amount of components (A) and (B) and,
(D) 15 to 50% by weight of an amorphous polyimide the glass transition temperature of which is 200°C or higher based on the total amount of components (A) and (B). 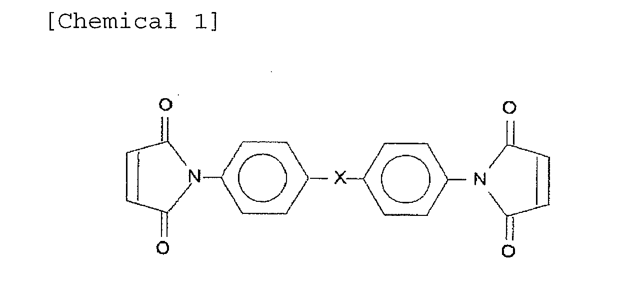 Formula [1]
wherein, X is -CH₂-, -C(CH₃)₂-, -SO₂-, -SO-, -CO-, -S- and -O-. 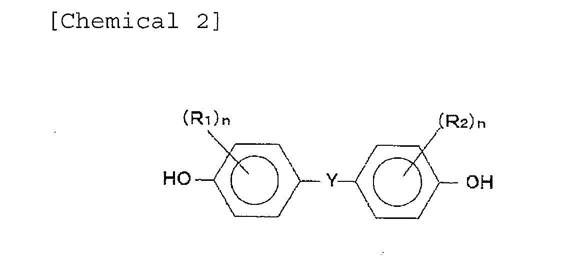 Formula [2]
wherein, R₁ or R₂ is each independently an allyl group, n is an integer of 1 to 4, and Y is -CH₂-, or -C(CH₃)₂-.

2. The prepreg according to claim 1, wherein the repeated structural unit expressed by formula [3] below and the repeated structural unit expressed by formula [4] below, of the amorphous polyimide of component (D), are 40% by mole or more and 5 to 60% by mole, respectively. 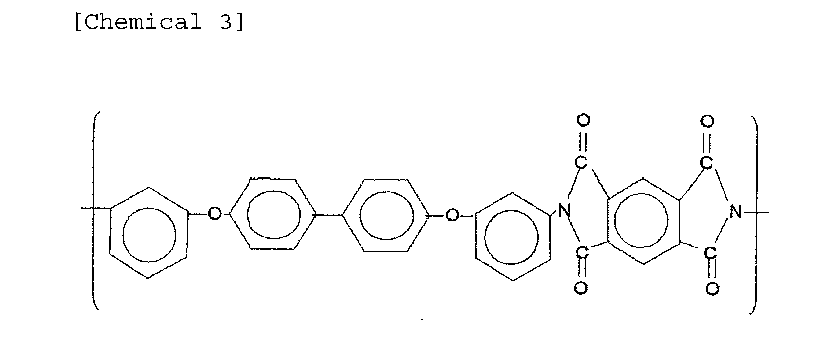 Formula [3] 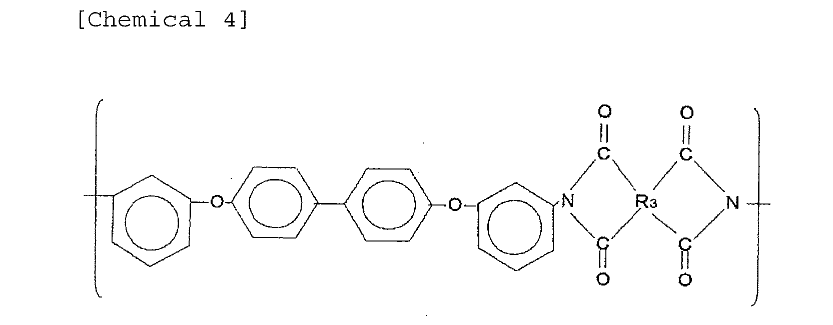 Formula [4]
wherein, R₃ is a quadrivalent group selected from the group consisting of a monocyclic aromatic group, a condensed polycyclic aromatic group and non-condensed polycyclic aromatic groups produced by linking directly or via a cross-linked member an aromatic group to each other.

3. The prepreg according to claim 1 or 2, wherein the amorphous polyimide of component (D) comprises particulates and its particle diameter is 100 µm or less.

4. The prepreg according to claim 3, wherein the amorphous polyimide particulates of component (D) are localized and distributed in the surface vicinity on one or both sides of the prepreg.

5. The prepreg according to claim 1 or 2, wherein the amorphous polyimide of component (D) comprises a fibrous nonwoven fabric and the fibrous nonwoven fabric is placed in the surface vicinity of one or both sides of the prepreg.

6. The prepreg according to claim 1 or 2, wherein the amorphous polyimide of component (D) comprises particulates and a fibrous nonwoven fabric and the particulates and the fibrous nonwoven fabric are placed in the surface vicinity of one or both sides of the prepreg.

7. The prepreg according to claim 1 or 2, wherein the polyetherimide of component (C) is a polyetherimide having a repeated structural unit expressed by formula [5] below and a unit number average molecular weight of 3,000 to 50,000. 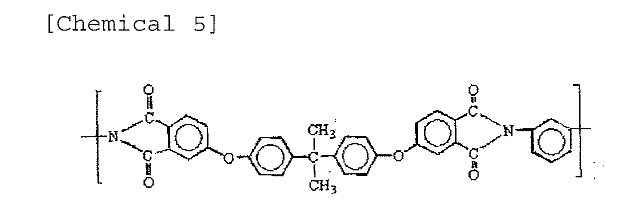 Formula [5]

8. A composite material produced by laminating a plurality of prepregs made by impregnating into a fiber reinforcement a resin composition including components (A) to (D) as essential components, and heat-curing the laminate, wherein component (D) is localized between laminated layers and forms a phase separated structure.
(A) 40 to 70 parts by weight of an aromatic bismaleimide expressed by formula [1],
(B) 60 to 30 parts by weight of an alkenylphenol expressed by formula [2],
(C) 1 to 10% by weight of a polyetherimide of a thermoplastic resin based on the total amount of components (A) and (B), and
(D) 15 to 50% by weight of an amorphous polyimide the glass transition temperature of which is 200°C or higher based on the total amount of components (A) and (B). 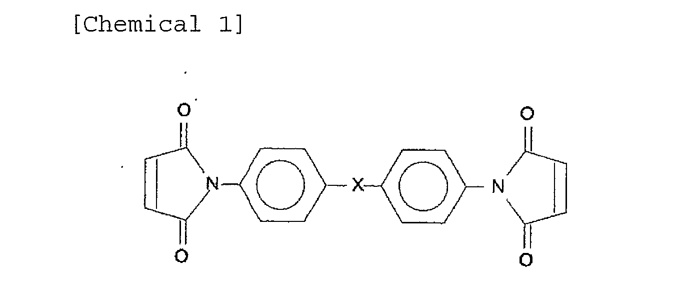 Formula [1]
wherein, X is -CH₂-, -C(CH₃)₂-, -SO₂-, -SO-, -CO-, -S- and -O-. 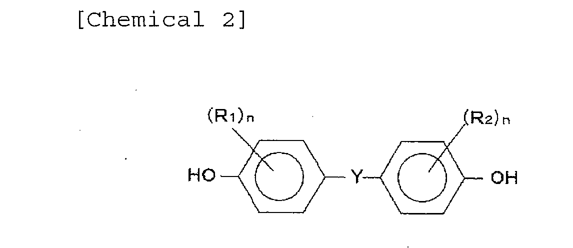 Formula [2]
wherein, R₁ or R₂ is each independently an allyl group, n is an integer of 1 to 4, and Y is -CH₂-, or -C(CH₃)₂-.

9. The composite material according to claim 8, wherein the plurally laminated prepreg is heat-cured and then further post-cured at 200°C or higher and the glass transition temperature of the composite material is made to be 220°C or higher.
